Europäisches Patentamt

European Patent Office

Office européen des brevets

(11) Publication number: **0 157 517**
A1

## EUROPEAN PATENT APPLICATION

(21) Application number: 85301753.1

(22) Date of filing: 14.03.85

(51) Int. Cl.⁴: **F 16 L 33/04**

(30) Priority: 15.03.84 US 589742

(43) Date of publication of application: 09.10.85
Bulletin 85/41

(84) Designated Contracting States: DE FR GB IT SE

(71) Applicant: PETERSON AMERICAN CORPORATION,
21200 Telegraph Road, Southfield Michigan 48086 (US)

(72) Inventor: Bucciero, Henry R., 19928 Fleetwood, Harper
Woods Michigan 48225 (US)

(74) Representative: Huntingford, David Ian et al, W.P.
THOMPSON & CO. Coopers Building Church Street,
Liverpool L1 3AB (GB)

(54) Constant self-tightening spring fastener.

(57) A hose clamp comprising a circular bight having first and second ends extending beyond each other in opposite directions and thereafter curved back toward each other. Fastening members (18, 24) are positioned in engagement with the ends of the clamp. A coil spring (36) threaded through the fastening members provides the dual function of (a) constricting the bight in response to threading the coil spring through the fastening members, which threading also biasses the coil spring in compression and thereafter (b) applying a constant force to cause constriction of the bight.

-1-

## DESCRIPTION
### CONSTANT SELF-TIGHTENING SPRING FASTENER.

The present invention relates to spring fastener devices such as those having a particular utility as part of a hose clamp.

Hose clamps are, of course, well known. One type of hose clamp is a single wire formed with a bight portion and two extending ends opposing each other. The ends are squeezed toward each other to loosen the bight portion from around the hose. A typical example of this type hose clamp is illustrated in Arras U.S. Patent 2,180,271 issued November 14, 1939.

A second type of hose clamp uses a double bight or double loop of wire with overlapping opposed ends and with a screw and fastener device to tighten or loosen the clamp on the hose. A clamp of this type is illustrated and described in U.S. Patent 2,349,809 issued to C.F. Black on May 30, 1944.

Hose clamps of the types described in the aforementioned two patents are frequently used to secure hoses to the inlet and outlet fittings of automobile radiators, automobile heaters and the like. One problem in the use of the aforementioned types of clamps in automobiles is that the clamp "sets" on the hose after the clamp is tightened and after the hose has gone through numerous hot and cold cycles. These hot and cold cycles are caused by the temperature of the coolant flowing through the hose as well as by environmental conditions. Also, as the hose material tends to dry out through use, the hose actually contracts slightly in wall thickness which results in a reduction of the outside diameter and an increase in the inside diameter of the hose. These conditions lead to a loose connection rather than a fluid-tight connection.

-2-

Heretofore, it has been necessary to manually tighten hose clamps as the inside and outside diameters of the hose itself change.

An object of the present invention is to provide a hose clamp in which the disadvantages of the known devices are substantially overcome.

In accordance with the present invention, there is provided a hose clamp of the type including a circular bight and first and second fastener engaging portions extending beyond each other in opposite directions, the hose clamp including resilient constricting means for expanding said first and second fastener engaging portions away from each other for constricting the bight upon rotation of the resilient constricting means and for thereafter applying a force between the first and second fastener engaging portions, tending to further constrict the bight.

Thus, in a clamp in accordance with the present invention, the bight is subjected to a constant force tending to tighten the clamp about the hose.

The present invention therefore overcomes the need for manually adjusting the tightness of a hose clamp to accommodate changes in the hose by providing a spring fastener hose clamp having an automatic, constant self-tightening capability.

A preferred embodiment of a hose clamp in accordance with the present invention utilizes a helical coil spring and pin combination to provide the dual functions of (a) serving as a threaded member for initially tightening the clamp on the hose and (b) thereafter exert a self-tightening force to automatically continue to tighten the hose clamp on the hose. The helical coil spring and pin form a combination of parts referred to as a spring fastener.

The invention is described further hereinafter, by way of example only, with reference to the accompanying drawings, in which:

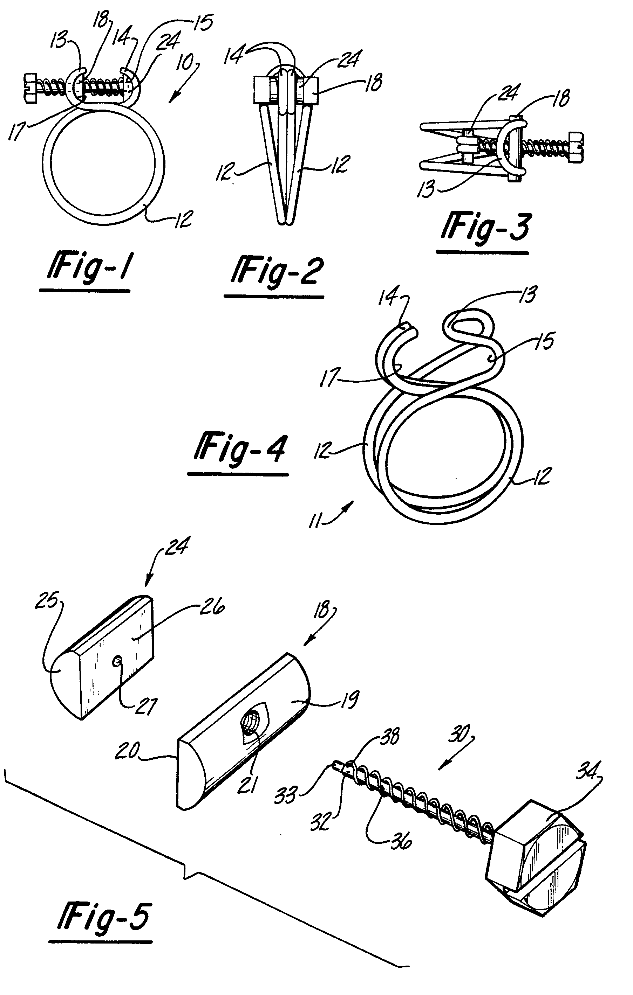

Figure 1 is a side elevation of one embodiment of a hose clamp in accordance with the present invention;

Figure 2 is an end view of the hose clamp of Figure 1;

Figure 3 is a top plan view of the hose clamp of Fig.1;

Figure 4 is a perspective illustration of the hose clamp body; and

Figure 5 is a perspective, exploded illustration of several of the component parts of the hose clamp.

The present invention may be utilized with hose clamps of different types and in numerous other clamping operations. For the purpose of illustration, the invention is described in the context of a wire hose clamp configured with a double bight or double loop. However, other configurations may be used such as a flat band instead of a wire; single bight, etc.

The constant self-tightening hose clamp 10 of the present invention is illustrated in the form of a single wire of circular cross-section and of suitable gauge. The wire is first bent double upon itself and then the double wire is bent in a loop or circle. This forms the clamp body 11 with two laterally spaced bights or hose constricting portions 12. When the wire initially is bent double upon itself, a U-shaped loop 13 is formed at the centre of the wire, intermediate the free ends 14 of the wire.

In addition to forming the double wire as a double loop, the centre 13 and free ends 14 extend beyond each other and then are partially curved back toward each other. Thus the double centre 13 becomes an "end" which is partially curved back to form a first

-4-

fastener engaging portion 15 and the free ends 14 of the wire are formed as a hook 17 which functions as a second fastener engaging portion. The first and second fastener engaging portions are spaced apart and generally curved toward each other and appear in plan view to extend beyond each other in opposite directions and thereafter facing each other.

A first fastener means 18 may be formed similar to a vertical one-half of a right circular cylinder having a curved outer semi-circular portion 19 and a flat portion 20. A threaded aperture 21 is provided through the diameter of the fastener means. This first fastener means may be referred to as a threaded nut.

The illustrated hose clamp includes a second fastener means 24 which may be referred to as a push nut. The second fastener means 24 may also be formed as a vertical one-half of a right circular cylinder and includes a semi-circular outer surface 25, a flat surface 26 and a central pocket 27. The curved portions 19, 25 of the fastener means are configured to fit within the curved fastener engaging portions 15, 17 of the body of the hose clamp.

Obviously the push nut and threaded nut may take any convenient configuration.

The hose clamp further includes a coil and pin as a spring fastener means which function as a resilient constricting means 30 which is utilized to expand the first and second fastener engaging portions of the wire 15, 17 away from each other.

As illustrated, the relative positions of the spring fastener push nut and threaded nut act to produce compression on the spring coil, the reaction to which is a force tending to move the push nut and threaded nut away from each other. It is within the scope of the present invention to rearrange those parts to produce an expansion force on the spring coil the reaction to which is a force tending to move the push nut and threaded nut toward each other. This action will constrict the bight 12 of the wire around a hose or the like.

The resilient constricting means 30 includes an elongate, solid shaft 32 of a first diameter, the shaft having a first or pilot end 33 and a second headed end 34. The headed end may have a hexagonal shaped enlargement and a transverse slot so that the headed end may be turned either by a wrench or a screwdriver. The resilient constricting means also includes a resilient coil or spring 36 formed as a right hand helix to produce righthand threading action. The resilient constricting means could be a left hand helix to produce lefthand threading action if desired. The coil 36 surrounds the solid shaft 32 and the leading end of the coil 36 is attached to the solid shaft 32 a short distance away from the pilot end 33 such as by brazing, connective forming or the like at 38. The second end of the coil 36 abuts loosely against the underside of the headed end 34 of the resilient constricting means 30.

The operation of the constant self-tightening hose clamp of the present invention will now be explained. When it is desired to secure a hose to a fitting, the resilient constricting means 30 is threaded through the first fastener means 18 and the first fastener means 18 is positioned within the first fastener engaging portion 15 of the clamp. The second fastening means 24 is positioned in the second fastener engaging portion of the clamp and the headed end 34 is rotated in a clockwise direction for righthand threading action (or counterclockwise for left hand threading) so that the spring 36 is advanced until the pilot end 33 engages the pocket 27 in the second fastening means 24. Thereafter, the headed end 34 is further rotated to continue to advance the helical coil spring 36. This causes the portions 15 and 17 of the clamp to expand away from each other thus constricting the bight 12 of the clamp around the hose. During this rotating of the headed end 34 and the advancing of the coil 36, a portion of the coil between the first and second fastening means 18,24 will be compressed. In reaction to the compression on the spring 36, the spring exerts a constant expansion force against the fastener engaging portions 15, 17. This expansion force tends to reduce the diameter of the bight of the hose clamp. Should the hose wall thickness decrease, either by a reduction in the outside diameter of the hose, an increase in the inside diameter of the hose, or both, such as may be occasioned by drying out of the hose itself, this constant expansion force caused by the compressed portion of the spring will cause the first and second fastener means 18, 24 to expand away from each other thus expanding the first and second fastener engaging portions 15, 17, of the clamp away from each other thereby further constricting the bight of the hose clamp.

The present clamp thus uses the helical coil to provide the dual functions of a threaded member, which may be rotated to initially tighten the clamp, and a member in compression exerting a force tending to further tighten the clamp.

In principle, if the spring coil 36 is of suitable strength, shaft 32 may not be required. Coil 36 may also be provided with some curvature relative to its longitudinal axis. The first fastener, or threaded nut 18, which is a female member, need not be a separate unit as illustrated in the drawings but rather the wire clamp may be formed with one or more upper loops through which the coil is threaded. Equally, the male nut 24 may be eliminated by forming the wire of the clamp to engage the coil. Also, the coil itself may be provided at the end of a rod, screw or pin rather than using a coil for the entire length of the constricting means and rather than using a coil surrounding a shaft.

. . . . . . . . . . . . . . . . . . . . . . . . . . . . . . . . . . . . . . . . . . . . . . . . . . . . .

## CLAIMS

1. A hose clamp of the type including a circular bight and first and second fastener engaging portions (15,17) extending beyond each other in opposite directions, characterised by resilient constricting means (30) for expanding said first and second fastener engaging portions away from each other for constricting the bight upon rotation of the resilient constricting means and for thereafter applying a force between the first and second fastener engaging portions (15,17), tending to further constrict the bight.

2. A hose clamp as claimed in claim 1, wherein the hose clamp includes a double bight.

3. A hose clamp as claimed in claim 1, wherein the hose clamp includes fastener means in one or more of the fastener engaging portions (15,17) of the clamp, said resilient constricting means (30) engaging said fastener means.

4. A hose clamp as claimed in claim 3, wherein one of said fastener means is a push nut (24).

5. A hose clamp as claimed in any of claims 1 to 4, wherein said resilient constricting means (30) is a coil spring (36).

6. A hose clamp as claimed in any of claims 1 to 4, wherein said resilient constricting means (30) is a coil spring (36) and an elongate member (32).

7. A hose clamp as claimed in any of claims 1 to 4, wherein said resilient constricting means (30) is a coil spring (36) surrounding an elongate shaft (32), one end of said coil spring (36) being secured to said shaft.

8. A hose clamp as claimed in claim 3 or claim 4, wherein the resilient constricting means (30) is a coil spring (36) surrounding a shaft (32) and wherein said shaft (32) engages said fastener means.

-9-

9. A hose clamp as claimed in any of claims 1 to 8, wherein, in use of the clamp, a portion of said resilient constricting means (30) is biassed in compression.

........................................................

0157517

1 / 1

**Fig-1**

**Fig-2**

**Fig-3**

**Fig-4**

**Fig-5**

European Patent
Office

**EUROPEAN SEARCH REPORT**

| | DOCUMENTS CONSIDERED TO BE RELEVANT | | EP 85301753.1 |

| Category | Citation of document with indication. where appropriate, of relevant passages | Relevant to claim | CLASSIFICATION OF THE APPLICATION (Int. Cl.4) |
|---|---|---|---|
| X | GB - A - 2 104 584 (MOLLIFICIO LEGNANESE SRL) <br> * Totality * <br> -- | 1-9 | F 16 L 33/04 |
| X | DE - A1 - 3 002 454 (RASMUSSEN GMBH) <br> * Totality * <br> -- | 1-4 | |
| P,X | DE - A1 - 3 245 092 (VOLKSWAGEN-WERK AG) <br> * Totality * <br> -- | 1-4 | |
| D,A | US - A - 2 349 809 (C.F.BLACK) <br> * Totality * <br> -- | 1 | |
| A | DE - A1 - 2 716 809 (AUTOMOBILES PEUGEOT) <br> ---- | | **TECHNICAL FIELDS SEARCHED (Int. Cl.4)** <br><br> F 16 L 33/00 |

The present search report has been drawn up for all claims

| Place of search | Date of completion of the search | Examiner |
|---|---|---|
| VIENNA | 24-05-1985 | SCHUGANICH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82